(19) Europäisches Patentamt

European Patent Office

Office européen des brevets

(11) Veröffentlichungsnummer : **0 343 466 B1**

(12) **EUROPÄISCHE PATENTSCHRIFT**

(51) Int. Cl.⁵ : **B65G 69/04**

(45) Veröffentlichungstag der Patentschrift :
**11.03.92 Patentblatt 92/11**

(21) Anmeldenummer : **89108667.0**

(22) Anmeldetag : **13.05.89**

(54) **Vorrichtung und Verfahren zur gleichmässigen Verteilung von Material auf einer Kreisfläche.**

(30) Priorität : **25.05.88 LU 87226**

(43) Veröffentlichungstag der Anmeldung :
**29.11.89 Patentblatt 89/48**

(45) Bekanntmachung des Hinweises auf die
Patenterteilung :
**11.03.92 Patentblatt 92/11**

(84) Benannte Vertragsstaaten :
**AT BE CH DE ES FR GB GR IT LI NL SE**

(56) Entgegenhaltungen :
**US-A- 4 216 914**

(73) Patentinhaber : **PAUL WURTH S.A.**
**32 rue d'Alsace**
**L-1122 Luxembourg (LU)**
Patentinhaber : **Rheinische**
**Braunkohlenwerke AG.**
**Stüttgenweg 2**
**W-5000 Köln 41 (DE)**

(72) Erfinder : **Klutz, Hans Joachim**
**Otterdriesch 13D**
**W-8042 Erfstadt-Lechenich (DE)**
Erfinder : **Flora, Bruno**
**9 Huelgass**
**L-4396 Pontpierre (LU)**
Erfinder : **Gilles, Gérard**
**48 rue Mies**
**L-7557 Mersch (LU)**
Erfinder : **Wies, Georges**
**15 rue Edison**
**L-3462 Dudelange (LU)**

(74) Vertreter : **Meyers, Ernest et al**
**Office de Brevets FREYLINGER & ASSOCIES**
**B.P. 1 321, route d'Arlon**
**L-8001 Strassen (LU)**

EP 0 343 466 B1

## Beschreibung

Gegenstand dieser Erfindung ist eine Vorrichtung zur gleichmässigen Verteilung von Material auf einer Kreisfläche mit Hilfe einer geneigten Drehschurre, deren Neigungswinkel einstellbar ist. Die Erfindung schliesst auch ein Verfahren ein, das mit einer solchen Vorrichtung durchgeführt werden kann.

Bei den in Frage kommenden Materialien handelt es sich um Schüttgüter in Staub-, Körner-, Pulver- oder sonstiger Form, die in aufeinanderfolgenden gleichmässigen Schichten in einen in der Regel zylindrischen Raum gegeben werden. Bei bestimmten Anwendungsfällen kommt es darauf an, dass diese Materialien mit einer optimalen Gleichmässigkeit verteilt werden. Dies gilt beispielsweise für Wirbelschichttrockner für Braunkohle, in denen das Material durch ein Fluidisierungsmedium im aufgewirbelten Zustand gehalten werden muss. Wenn nämlich die Verteilung der Braunkohle nicht die geforderte Gleichmässigkeit aufweist, besteht die Gefahr, dass die Wirbelschicht an den Stellen ungleichmässiger Verteilung gestört wird. Eine weitere Anwendungsmöglichkeit ist die Verteilung von staub- oder pulverförmigen Materialien auf der Oberfläche eines Metallschmelzbades in einer Giesspfanne. Dabei handelt es sich um Produkte zur Behandlung von Metall, wie z.B. Produkte zur Entschwefelung, zum Frischen von Metall oder auch Zusatzstoffe bei der Herstellung von Legierungen mit bestimmten Eigenschaften.

Zur Gewährleistung einer gleichmässigen Verteilung wird in dem Dokument EP-A1-0059411 eine aus koaxialen kegelförmigen oder kegelstumpfförmigen Elementen bestehende Verteilvorrichtung vorgestellt, die eine Verteilung des Materials in koaxialer kegelstumpfartiger Form in konzentrischen kreisen auf der Oberfläche eines Metallbades bewirkt. Folglich weist die so aufgetragene Schicht kreisförmige Wellen auf, deren Breite und Höhe von der Anzahl der Elemente der Verteilvorrichtung abhängt.

Man kennt auch Verteilvorrichtungen, die aus einer drehenden Abwurfschurre mit einstellbarem Neigungswinkel bestehen. Diese Schurren tragen das Material ebenfalls in konzentrischen kreisen auf, oder möglicherweise in Form einer Spirale, wenn der Neigungswinkel ständig geändert wird. Folglich weist die Schicht auch hier Wellen in radialer Richtung auf. Anders ausgedrückt muss man also, um eine Mindestdicke der aufgetragenen Schicht auf der gesamten Oberfläche sicherzustellen, bei jedweder Vorrichtung mehr Material als erforderlich vorsehen, um die Tatsache zu berücksichtigen, dass die Wellen höher sein müssen, damit dazwischen die Mindestschichtdicke erreicht wird. Nun steht aber das gewellte Profil der mit diesen Vorrichtungen aufgetragenen Schicht dem angestrebten Ziel nicht nur in technischer und metallurgischer Hinsicht entgegen, sondern es wirkt sich beim Anwendungsfall der Giesspfannen auch negativ auf den Selbstkostenpreis der Legierung aus. Die Legierungszusätze sind nämlich sehr teuer, und man sollte davon nicht mehr als unbedingt notwendig verbrauchen.

Aus dem Dokument US-A-4,216,914 ist eine Vorrichtung bekannt zum Verteilen von körnigem Material mit Hilfe einer Drehschurre, wobei das Material über eine Längskante der Drehschurre abgeschüttet wird. Auf der Gleitfläche der Schurre sind mehrere Ablenkrippen vorgesehen um das Material zur Abschüttkante hin abzulenken.

Ziel dieser Erfindung ist die Bereitstellung einer verbesserten Vorrichtung und eines verbesserten Verfahrens zur Erzielung einer gleichmässigeren Verteilung, als dies bei den bekannten Vorrichtungen der Fall ist. Zur Erreichung dieses Ziels wird in der Erfindung eine Vorrichtung der zu Beginn beschriebenen Art vorgestellt, welches gemäss dem Hauptanspruch gekennzeichnet ist.

Der Neigungswinkel und die Drehgeschwindigkeit der Schurre werden je nach Art des zu verteilenden Materials eingestellt, so dass dieses unter dem Einfluss der Schwerkraft und der Corioliskraft über die gesamte Länge der S-förmigen Seite in Form eines gleichmässigen Schleiers abgeworfen wird, der sich von der Peripherie der zu bedeckenden Fläche bis zu ihrem Mittelpunkt erstreckt.

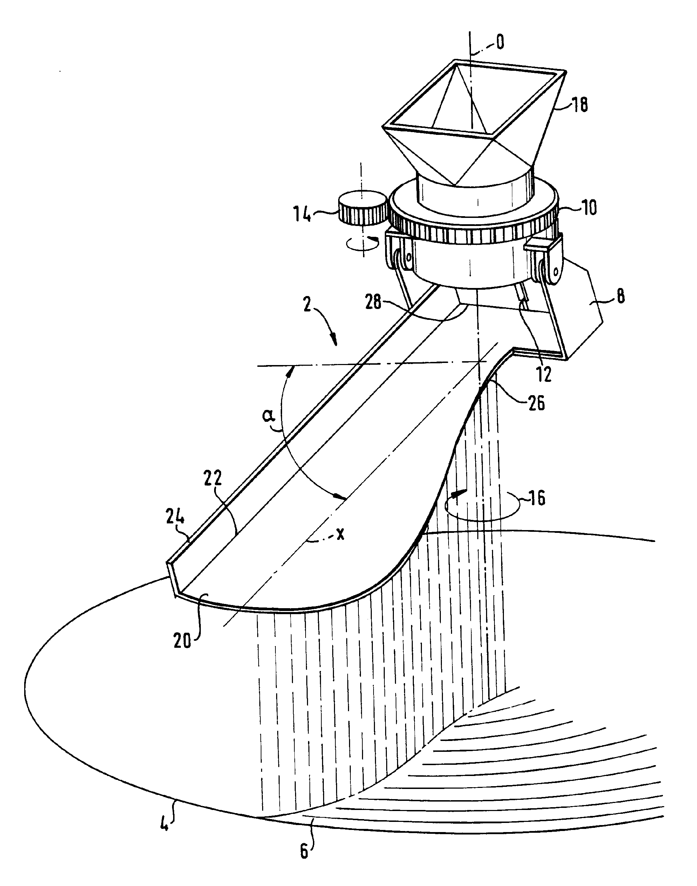

Die Drehgeschwindigkeit und der Neigungswinkel der Schurre werden vorzugsweise durch Versuche ermittelt. Weitere Merkmale und Besonderheiten sind in der ausführlichen Beschreibung einer bevorzugten Ausführungsart, wie sie nachstehend zur Verdeutlichung dargelegt wird, enthalten; dabei wird Bezug genommen auf die Abbildung die schematisch eine perspektivische Ansicht einer Verteilungsschurre zeigt.

Diese Verteilungsschurre, die in der Abbildung mit Nr 2 bezeichnet wird, dient dazu, eine Kreisfläche 4 gleichmässig mit einer Schicht 6 aus staub-, pulver- oder kornförmigem Material zu bedecken.

Zu diesem Zweck ist die Schurre 2 mit Hilfe eines Bügels 8 schwenkbar an einem Kranz 10 aufgehängt, der um die vertikale Mittelachse 0 drehbar ist. Der Neigungswinkel α der Schurre bezogen auf die Horizontale kann von Hand mit Hilfe einer Einstellvorrichtung 12, die an sich bekannt ist und ganz einfach aus Elementen mit Aussen- und Innengewinde bestehen kann, eingestellt werden. Der Kranz 10 wird über ein Antriebsritzel 14 durch einen nicht dargestellten Motor in Drehbewegung versetzt, so dass sich die Schurre 2 in der von Pfeil 16 angezeigten Richtung um die Achse 0 dreht. Das zu verteilende Material wird durch den Kranz 10 und einen Trichter 18, der eventuell mit einer Dosiervorrichtung, beispielsweise nach Art eines Zellenrads, verbunden ist oder das Material von einem geeigneten Förderorgan erhält, auf die Schurre 2 aufgegeben. Gemäss der Erfin-

2

dung ist die Schurre so konzipiert, dass sie das Material bei einer einzigen Umdrehung über die gesamte Fläche 4 verteilt. Zu diesem Zweck weist die Schurre eine ebene Gleitfläche 20 auf, deren Längsseite 22, die sich bezogen auf die Drehrichtung vorne befindet, geradlinig ist und eine Rückhaltekante 24 aufweist. Die gegenüberliegende Längsseite 26 bildet über ihre gesamte Länge den Abwurfrand für das Material.

Die besondere Konzeption der Schurre 2, insbesondere die Form der Abwurfseite 26, beruht auf der Berücksichtigung verschiedener Kriterien, die die Flugbahn des Materials beim Herabfallen beeinflussen oder aber durch die Zielsetzung einer gleichmässigen Verteilung bedingt werden. Man muss nämlich berücksichtigen, dass das Material unter dem Einfluss der Schwerkraft und der Fliehkraft auf der Schurre eine Beschleunigung erfährt. Ausserdem unterliegt das Material dem Coriolis-Effekt, der in entgegengesetzter Richtung zu Drehbewegung der Schurre wirkt. Darüber hinaus muss man, um eine Schicht mit einer gleichmässigen Dicke aufzutragen, die Tatsache berücksichtigen, dass die lineare Geschwindigkeit der Schurre vom Mittelpunkt zur Peripherie hin zunimmt, d.h. dass die pro Zeiteinheit von der Schurre abgedeckte Fläche proportional zum Quadrat des Radius zunimmt. Das bedeutet, dass die am Ende der Schurre abgeworfene Materialmenge deutlich grösser sein muss als die Menge, die vom oberen Teil der Schurre aus in die Mitte fällt.

Um diesen Kriterien Rechnung zu tragen, hat die Abwurfseite 26 in etwa die Form eines langen "S", das sich vom Bereich der oberen geradlinigen Querseite 28 ohne Unterbrechungen oder Ecken bis zum unteren Ende der geradlinigen Seite 22 erstreckt und gleichzeitig die der Querseite 28 gegenüberliegende untere Seite bildet. In der oberen Hälfte ist die Abwurfseite 26 der Längsachse X der Schurre am nächsten. Dadurch ist es möglich, wenig, aber genug Material in den mittleren Bereich der Fläche 4, über dem die lineare Geschwindigkeit der Schurre am niedrigsten ist, abzuwerfen.

In dem Masse, wie der Radius des Abwurfs auf die Fläche 4 zunimmt, muss auch die abgeworfenen Materialmenge zunehmen, um die Erhöhung der linearen Drehgeschwindigkeit auszugleichen. Dies geschieht automatisch durch die natürliche Verstärkung der Ablenkung unter dem Einfluss der Coriolis-Effekts, der in entgegengesetzter Richtung zur Drehbewegung der Schurre 2 wirkt. Um jedoch zu vermeiden, dass als Folge des Coriolis-Effekts das gesamte Material von der Schurre geworfen wird, bevor es im unteren Bereich ankommt, und um sicherzustellen, dass am unteren Ende der Schurre eine maximale Menge gegeben ist, um den peripheren Bereich der Fläche 4 ausreichend abzudecken, verbreitert sich die Abwurfseite 26 ab der Mitte der Schurre und entfernt sich damit von der Achse X, verengt sich an unteren Ende wieder und setzt sich bis zur Ecke der gegenüberliegenden Seite 22 fort. Diese Form der Abwurfseite 26 gewährleistet, dass das Material in Form eines zusammenhängenden Schleiers abgeworfen wird, der sich vom Mittelpunkt der Fläche 4 bis zu ihrem äusseren Rand erstreckt und zunehmend verdichtet.

Die Winkelgeschwindigkeit der Drehbewegung der Schurre 2 sowie ihr Neigungswinkel $\alpha$ werden je nach Art des abzuwerfenden Materials und der Dicke der auf die Fläche 4 aufzutragenden Schicht empirisch bestimmt. Um die Auswirkungen des Anfahrens und Anhaltens der Schurre abzuschwächen, die sich in Form einer radialen Ungleichmässigkeit in der Dicke der abgelagerten Schicht bemerkbar machen könnte, ist es am besten, die Materialmenge so einzustellen, dass die gewünschte Dicke der Schicht 6 erst nach mehrmaligem Auftragen bzw. nach mehreren vollen Umdrehungen der Schurre 2 erreicht wird.

Statt die Geschwindigkeit der Schurre einzustellen ist es auch möglich, die Form der Abwurfseite 26 zu verändern, beispielsweise die S-Kurve schwächer oder stärker auszuprägen, um mit einer bestimmten Geschwindigkeit arbeiten zu können.

Eine andere Möglichkeit, wie man die Gleitbahn des Materials auf der Schurre beeinflussen kann, besteht darin, im Inneren des Kranzes Ablenkklappen vorzusehen, um die Auftreffstelle des Materials auf der Gleitfläche der Schurre zu verändern.

Schliesslich bleibt noch hervorzuheben, dass die Erfindung keineswegs auf die beiden zu Beginn genannten Anwendungsfälle beschränkt ist, sondern dass man sie überall da einsetzen kann, wo eine möglichst gleichmässige Verteilung gewünscht wird.

## Patentansprüche

1. Vorrichtung zur gleichmässigen Verteilung von Materialien auf einer Kreisfläche (4) mit Hilfe einer geneigten Drehschurre (2) mit einstellbarem Neigungswinkel ($\alpha$), die dadurch gekennzeichnet ist, dass die Schurre (2) eine lange, ebene Gleitfläche (20) mit einer geradlinigen bezogen auf die Drehrichtung die Vorderseite der Schurre bildende erste Längsseite (22) aufweist, die mit einer Rückhaltekante (24) versehen ist, während die gegenüberliegende zweite Längsseite die Abwurfseite (26) bildet und in etwa die Form eines langen "S" hat, das sich vom Bereich der oberen geraden Querseite (20) ohne Unterbrechungen oder Ecken über das untere Ende der zweiten Längsseite der Gleitfläche (20) bis zum unteren Ende der geradlinigen Seite (22) fortsetzt.

2. Vorrichtung nach Anspruch 1, dadurch gekennzeichnet, dass der Neigungswinkel ($\alpha$) und die Drehgeschwindigkeit der Schurre (2) je nach Art des zu verteilenden Materials einstellbar sind, so dass dieses unter dem Einfluss der Schwerkraft und der Corioliskraft über die gesamte Länge der S-förmigen Abwurfseite (26) in Form eines gleichmässigen Schleiers abgeworfen wird, der sich vom Mittelpunkt der zu bedeckenden Fläche bis zu ihrer Peripherie erstreckt.

## Claims

1. Device for uniformly distributing materials on a circular surface (4) with the aid of an inclined rotating chute (2) having an adjustable angle of inclination ($\alpha$), which is characterised in that the chute (2) comprises an elongated flat sliding surface (20) with a rectilinear first longitudinal side (22) forming the front side of the chute, viewed in the direction of rotation, and is provided with a retaining edge (24), while the opposite second longitudinal side forms the throw-off side (26) and has approximately the shape of an elongated "S" continuing from the region of the straight upper transverse side (28) without interruptions or corners, along the bottom end of the second longitudinal side of the sliding surface (20) as far as the bottom end of the rectilinear side (22).

2. Device according to Claim 1, characterised in that the angle of inclination ($\alpha$) and the speed of rotation of the chute (2) can be adjusted according to the nature of the material to be distributed, such that the latter is thrown off, under the influence of the force of gravity and the Coriolis force, along the entire length of the S-shaped throw-off side (26) in the form of a uniform veil extending from the centre of the surface to be covered as far as its periphery.

## Revendications

1. Dispositif pour la répartition régulière de matériaux sur une surface circulaire (4) à l'aide d'une goulotte rotative inclinée (2) ayant un angle d'inclinaison réglable ($\alpha$), caractérisé en ce que la goulotte (2) présente une surface oblongue plane de glissement (20) avec un premier grand côté (22) rectiligne, qui, compte tenu du sens de rotation, forme le côté avant de la goulotte, ledit premier côté étant pourvu d'un bord de retenue (24), tandis que le deuxième grand côté, opposé au premier, constitue le côté de déversement (26) et a à peu près la forme d'un "S" allongé qui s'étend de la zone du côté transversal rectiligne supérieur (28) sans discontinuités ni angles, en passant par l'extrémité inférieur du deuxième grand côté de la surface de glissement (20) jusqu'à l'extrémité inférieure du côté rectiligne (22).

2. Dispositif selon la revendication 1, caractérisé en ce que l'angle d'inclinaison ($\alpha$) et la vitesse de rotation de la goulotte (2) peuvent être ajustés en fonction du matériau à répartir de façon que celui-ci soit déversé sous forme d'un voile régulier qui s'étend, sous l'influence de la pesanteur et de la force de Coriolis, du centre de la surface à recouvrir sur toute la longueur du côté de déversement (26) en forme de "S".